# EUROPEAN PATENT SPECIFICATION

(11) **EP 1 436 092 B1**
(45) Date of publication and mention of the grant of the patent: **16.01.2008**
(21) Application number: 02798861.7
(22) Date of filing: 13.09.2002
(51) Int. Cl.: B05B 15/04, E04F 21/165

(54) **ADHESIVE TAPE USED AS AN AID WHEN APPLYING CAULK OR GROUT IN CERAMIC TILE CORNERS**
ALS HILFE BEIM AUFBRINGEN VON DICHTUNGSMITTEL ODER VERGUSSMÖRTEL IN KERAMIKFLIESENECKEN VERWENDETES KLEBEBAND
BANDE ADHESIVE AUXILIAIRE POUR APPLICATION D'UN JOINT OU D'UN COULIS DANS LES COINS DE CARREAUX DE CERAMIQUE

(30) Priority: 17.09.2001 US 322445 P
(43) Date of publication of application: 14.07.2004
(73) Proprietor: Lian, Frank, 5003 Bergen (NO)
(72) Inventor: Lian, Frank, 5003 Bergen (NO)
(74) Representative: Briddes, Sam
(86) International application number: PCT/NO2002/000323
(87) International publication number: WO 2003/024614

(56) References cited:
- WO-A1-99/48618
- DE-U1- 20 203 423
- DE-U1- 29 801 688
- US-A- 5 658 632

## Description

### Field of the invention

This invention relates to adhesive tape, specifically to an adhesive tape useful for applying caulk or grout in ceramic tile corners.

### Background

Ceramic tiles are a common wall and floor covering. It is obviously desirable that the tiles have the most attractive appearance possible. Ceramic tile is typically installed by gluing the tiles to the surface, with great care being used to achieve a regular and uniform pattern. After the glue has dried, the spaces between the tiles are filled with a cement-like substance known as grout. The grout is spread out over the tile surface filling the spaces, and the residue wiped away. When done properly, this technique provides a uniform and attractive result.

The corners between perpendicular walls present a problem however. The above-described grouting technique cannot be employed in the corners. Here a caulking gun, or other similar device, is used to inject the grout. In bathrooms or other areas exposed to water, such corners are often filled with silicone rubber caulking, which as a practical matter can only be applied with a caulking gun.

The installer uses a caulking gun by squeezing a trigger, which causes the caulking substance to flow from a pointed nozzle, while at the same time moving the nozzle along the corner. Unfortunately, it is very difficult to achieve a uniform and attractive result using a caulking gun. The caulking substance flows from the nozzle more quickly when the trigger is first squeezed. If the installer does not precisely regulate the speed at which the caulking gun is moved along the wall, an irregular and unattractive result will be achieved.

One solution to this problem has been to adhere masking tape along each side of the corner. This is a very time-consuming and difficult procedure however. The two separate strips of tape must be applied at an equal distance from the corner and be kept parallel to each other along the entire length of the wall.

US-A- 5 658 632 discloses in Fig. 4 a prior art masking device having first and second strip members, each of which has first and second edges and first and second surfaces. A third strip member overlaps the first and second strip members. The outer edges of the first and second strip members are not, however, aligned with the edges of the third strip member.

The invention is defined by all of the features of claim 1.

### Brief description of the drawings

The present invention will be described with reference to the following figures, wherein
Fig. 1 is a perspective view of a role of tape according to the invention.
Fig. 2 is a perspective view of a role of tape according to the invention, with one end slightly open.
Fig. 3 is a perspective view of the tape applied in a corner.
Fig. 4 is a perspective view of a caulking gun in use with the tape of the invention.

### Detailed description of the invention

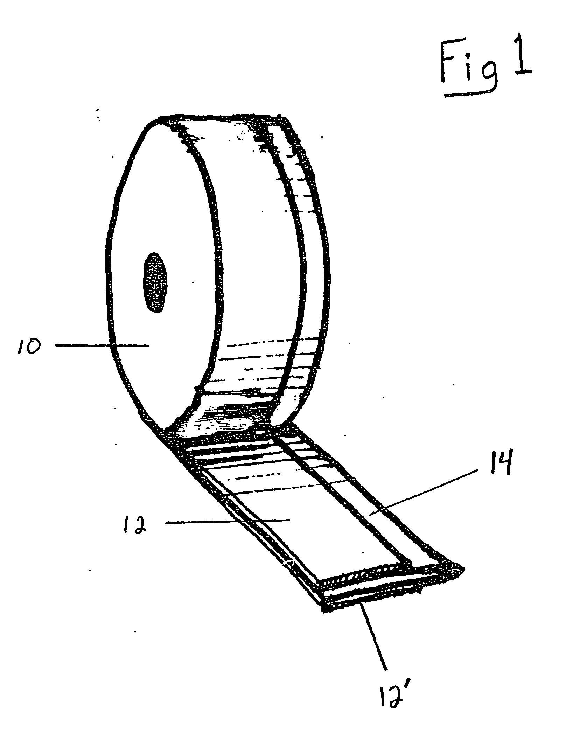

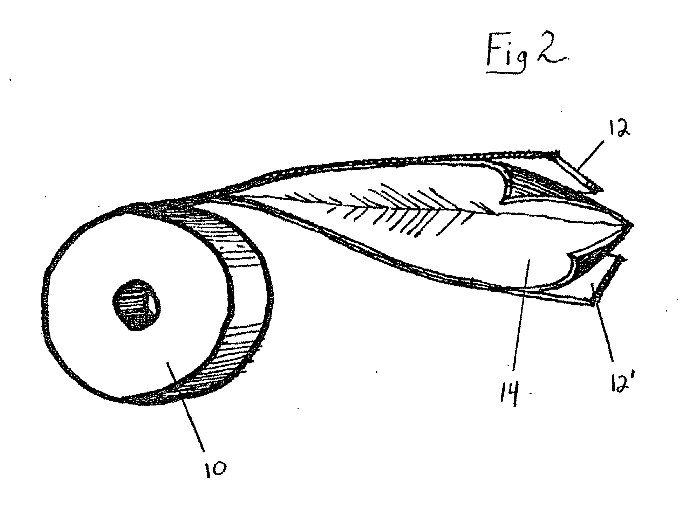

As depicted in Fig. 1, 2 and 4 the tape according to the invention is packaged as a role 10. As will become evident below, this packaging is not only convenient, but is also important for the function of the invention.

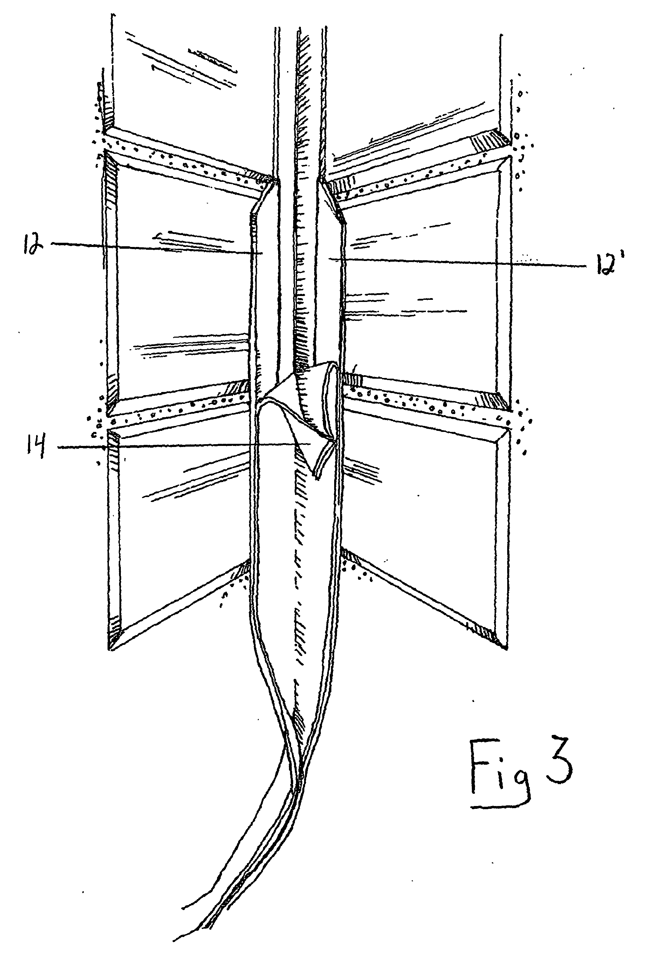

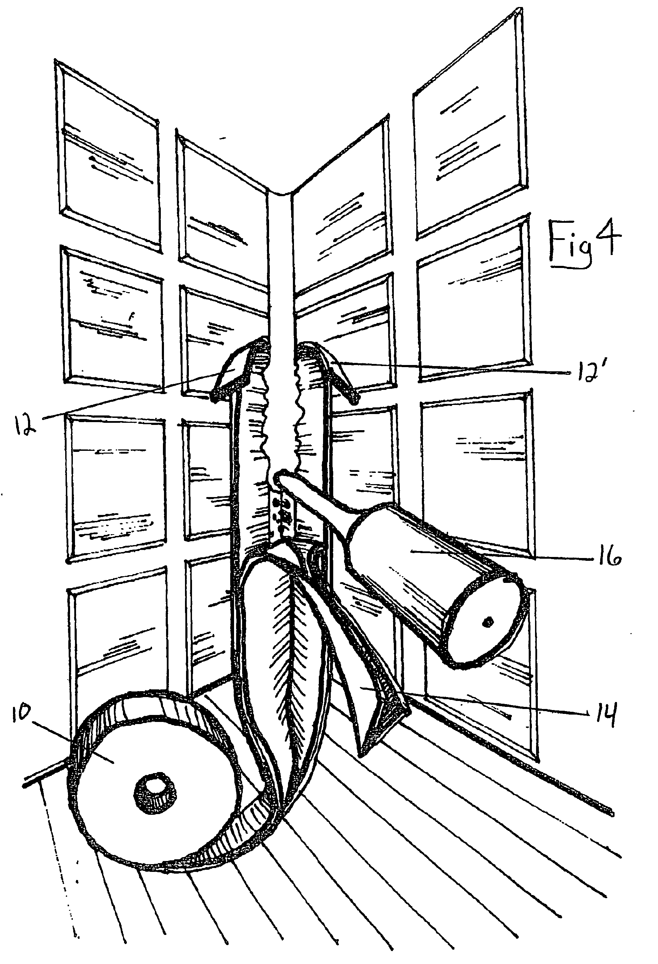

The tape according to the invention comprises two identical, double-sided adhesive strips 12 and 12'. Adhesive strips 12 and 12' have a front side and a back side. As shown in Fig. 2 and 3, said backsides of said adhesive strips 12 and 12' are attached to a backing strip 14 such that adhesive strips 12 and 12' are parallel to one another. Backing strip 14 is preferably made of a flexible plastic film or other suitable nonadhesive material.

Adhesive strips 12 and 12' are affixed along the outer edges of backing strip 14 such that, when backing strip 14 is folded in half and packaged as roll 10, adhesive strips 12 and 12' are in vertical alignment with one another, with the now-folded backing strip 14 sandwiched between them as depicted in Fig. 1. As can be further appreciated from Fig. 1, the width of backing strip 14 must be greater than two times the width of adhesive strip 12. This is in order to provide an exposed portion of backing strip 14 extending past the edges of adhesive strips 12 and 12' as shown in Fig. 1.

The tape according to the invention is used by first unrolling a length of tape from role 10. The folded edge of the exposed portion of backing strip 14 is then inserted into a corner. As can be appreciated from Fig. 2 and 3, the tape is then unfolded and the front sides of adhesive strips 12 and 12' are pressed against the tiles. Because backing strip 14 is nonadhesive and does not adhere to the tiles, it can be easily removed as shown in Fig. 3. The result is a perfectly straight, parallel channel that is equidistant on both sides from the apex of the corner.

As shown in Fig. 4, a caulking gun 16 is then utilized to apply the caulk or grout in the space between adhesive strips 12 and 12'. Before the caulk or grout has dried, adhesive strips 12 and 12' are removed. An attractive and uniform result is thus achieved.

## Claims

1. A caulking or grouting aid comprising two identical, elongated strips of double-sided adhesive tape (12 and 12') having a front side and a back side, said strips of double-sided adhesive tape being in parallel arrangement to one another, **characterized in that** the outer edges of the back sides of said strips of double-sided adhesive tape are aligned with and affixed along the outer edges of a non-adhesive backing strip (14) having a width greater than the combined widths of said strips of double-sided adhesive tape (12 and 12') such that a uniform channel is formed between said strips of double-sided adhesive tape (12 and 12').

2. A caulking or grouting aid according to claim 1, whereby said backing strip (14) is folded along the mid-line of the channel between said strips of double-sided adhesive tape (12 and 12') such that the respective back sides of said strips of double-sided adhesive tape (12 and 12') are brought together in vertical alignment with one another, thus leaving an exposed portion of non-adhesive strip (14) protruding past the edges of said strips of double-sided adhesive tape (12 and 12').

3. A caulking or grouting aid according to claim 2 whereby said caulking or grouting aid is in the form of a roll (10).

## Patentansprüche

1. Abdichtungs- oder Vergusshilfe, die zwei identische, längliche Streifen eines doppelseitigen Klebebandes (12 und 12') umfasst, das eine Vorderseite und eine Rückseite aufweist, wobei sich die Streifen des doppelseitigen Klebebandes in paralleler Anordnung zueinander befinden,
**dadurch gekennzeichnet, dass**
die äußeren Kanten der Rückseiten der Streifen des doppelseitigen Klebebandes mit den äußeren Kanten eines nicht klebenden Verstärkungsstreifens (14), der eine größere Breite als die kombinierten Breiten der Streifen des doppelseitigen Klebebandes (12 und 12') aufweist, ausgerichtet und daran längs befestigt sind, so dass ein gleichförmiger Kanal zwischen den Streifen des doppelseitigen Klebebandes (12 und 12') gebildet wird.

2. Abdichtungs- oder Vergusshilfe gemäß Anspruch 1, wobei der Verstärkungsstreifen (14) entlang der Mittellinie des Kanals zwischen den Streifen des doppelseitigen Klebebandes (12 und 12') gefaltet wird, so dass die entsprechenden Rückseiten der Streifen des doppelseitigen Klebebandes (12 und 12') vertikal miteinander verbunden werden, wodurch ein exponierter Abschnitt des nicht klebenden Streifens (14), der über die Kanten der Streifen des doppelseitigen Klebebandes (12 und12') vorsteht, gelassen wird.

3. Abdichtungs- oder Vergusshilfe gemäß Anspruch 2, wobei die Abdichtungs- oder Vergusshilfe in Form einer Rolle (10) vorliegt.

## Revendications

1. Aide au calfeutrage ou au jointoiement comprenant deux bandes allongées identiques de ruban adhésif double face (12 et 12') ayant un côté avant et un côté arrière, lesdites bandes de ruban adhésif double face étant en agencement parallèle l'une par rapport à l'autre, **caractérisée en ce que** les bords externes des côtés arrière desdites bandes du ruban adhésif double face sont alignés avec et fixés le long des bords externes d'une bande de dos non adhésive (14) ayant une largeur supérieure aux largeurs combinées desdites bandes du ruban adhésif double face (12 et 12') de sorte qu'un canal uniforme est formé entre lesdites bandes de ruban adhésif double face (12 et 12').

2. Aide au calfeutrage ou au jointoiement selon la revendication 1, dont ladite bande de dos (14) est pliée le long d'une ligne centrale du canal entre lesdites bandes de ruban adhésif double face (12 et 12') de sorte que les côtés arrière respectifs desdites bandes de ruban adhésif double face (12 et 12') sont réunis en alignement vertical l'un par rapport à l'autre, laissant ainsi une partie exposée de la bande non adhésive (14) faisant saillie au-delà des bords desdites bandes de ruban adhésif double face (12 et 12').

3. Aide au calfeutrage ou au jointoiement selon la revendication 2, **caractérisé en ce qu'**il se présente sous la forme d'un rouleau (10).
